Europäisches Patentamt

European Patent Office

Office européen des brevets

(19)

(11) **EP 0 644 008 B1**

(12) # EUROPÄISCHE PATENTSCHRIFT

(45) Veröffentlichungstag und Bekanntmachung des Hinweises auf die Patenterteilung:
**07.01.1999 Patentblatt 1999/01**

(51) Int. Cl.$^6$: **B23D 45/12**, B26D 7/02,
B26F 1/00

(21) Anmeldenummer: **94114417.2**

(22) Anmeldetag: **14.09.1994**

(54) **Vorrichtung zum Sägen von Schlitzen in Well- und Verbundrohre**

Device for sawing slots in corrugated and composite pipes

Dispositif de sciage des rainures dans des tubes ondulés et composites

(84) Benannte Vertragsstaaten:
**DE ES FR GB IT SE**

(30) Priorität: **22.09.1993 DE 4332123**

(43) Veröffentlichungstag der Anmeldung:
**22.03.1995 Patentblatt 1995/12**

(73) Patentinhaber: **Hegler, Wilhelm**
**D-97688 Bad Kissingen (DE)**

(72) Erfinder:
• **Hegler, Ralph-Peter, Dr.**
**D-97688 Bad Kissingen (DE)**

• **Hegler, Wilhelm**
**D-97688 Bad Kissingen (DE)**

(74) Vertreter:
**Rau, Manfred, Dr. Dipl.-Ing. et al**
**Rau, Schneck & Hübner**
**Patentanwälte**
**Königstrasse 2**
**90402 Nürnberg (DE)**

(56) Entgegenhaltungen:
**EP-A- 0 391 865**      **FR-A- 2 306 813**
**GB-A- 1 401 569**      **US-A- 3 957 386**

Printed by Xerox (UK) Business Services
2.16.5/3.4

## Beschreibung

Die Erfindung betrifft eine Vorrichtung zum Sägen von Schlitzen in Well- und Verbundrohre, die jeweils abwechselnd ringförmige Erhebungen und ringförmige Vertiefungen aufweisen.

Aus der EP 0 085 770 B1 (entsprechend US-PS 4 488 467) ist eine Vorrichtung zum Einschneiden von Schlitzen in Rohre aus schneidbarem Material, insbesondere in Drainagerohre aus Kunststoff, bekannt. Sie weist mindestens einen mindestens ein Messer tragenden Messerkopf auf, der durch ein Planetengetriebe zwangsangetrieben sich zumindest teilweise am Umfang des Rohres abwälzt. Hierbei läuft die Schneide des Messers in einer Epitrochoide um das Rohr um. Der Messerkopf ist mit in ringförmige Vertiefungen in der Außenwand des Rohres eingreifenden Stegen versehen. Der Messerkopf ist mit schraubenförmig verlaufenden Stegen versehen, zu denen das mindestens eine Messer parallel angeordnet ist. Hierdurch können Öffnungen in Rohre eingeschnitten werden, die über ihren Umfang mindestens teilweise kreisringförmige Erhebungen und entsprechende Vertiefungen aufweisen. Diese Vorrichtungen haben sich in der Praxis hervorragend bewährt; ihr Nachteil liegt darin, daß sie für Rohre mit großen Durchmessern konstruktiv zu aufwendig werden.

Aus einem Prospekt der UNICOR GmbH "CORRUGATORS Production lines for large-sized corrugated pipes 65-420 mm o.d.", mit dem Impressum 104/02/97/10.89/EA ist es bekannt, zum Herstellen von Schlitzen in den geschilderten Well- oder Verbundrohren Sägen einzusetzen. Hierbei sind maximal sechs Sägen um das Rohr herum einsetzbar, die um eine Gestell-Achse in Richtung auf das Rohr geschwenkt bzw. von diesem weggeschwenkt werden. Das Rohr wird während des Sägens in Richtung seiner Achse festgehalten.

Aus der GB-A-1 401 569 ist eine Vorrichtung zum Einschneiden von Schlitzen in glattwandige Rohre aus schneidbarem Material, insbesondere in Drainage-Rohre aus Kunststoff, bekannt. Diese Vorrichtung weist ein Maschinengestell auf, auf dem eine rinnenförmige Auflage für ein Rohr angebracht ist, das zum Einschneiden der Schlitze von oben mittels einer Klemmbacke auf dieser Auflage fixierbar ist. Das Einschneiden der Schlitze erfolgt mittels mehrerer Sägen, die an Schwenkhebeln angebracht sind und hiermit in eine Schneidstellung und in eine vom Rohr freie Stellung verschwenkt werden können. Die Sägeblätter dieser Sägen sind über etwa 180° Umfangswinkel des Rohres angeordnet. Jede Säge trägt eine Vielzahl von Sägeblättern, so daß mit einem Sägevorgang, eine Vielzahl von in Achsrichtung des Rohres hintereinander angeordneten Schlitzen in das Rohr geschnitten werden. Zum Vorschub bzw. Weitertransport des Rohres ist ein weiterer Schlitten vorgesehen, auf dem das Rohr mittels einer Klemmbacke gehalten und nach vorne geschoben werden kann. Mit dieser Vorrichtung können gewellte Rohre nicht mit Schlitzen versehen werden, da keinerlei Maßnahmen vorgesehen sind, mittels derer sichergestellt wird, daß die Sägen tatsächlich in den Wellentälern schneiden.

Aus der EP-A-0 391 865 ist eine Vorrichtung zum Abschneiden von Rollen aus langen Rollen aus Papier oder vergleichbarem Material, beispielsweise von Toilettepapier-Rollen bekannt, bei der die lange Ausgangs-Rolle durch einen Ring geführt wird, der mehrere verschiebbare Halte- und Zentrier-Schieber aufweist, mittels derer die lange Ausgangs-Rolle während des Schneidens gefaltet wird.

Der Erfindung liegt die Aufgabe zugrunde, eine Vorrichtung der eingangs angesprochenen Art so auszugestalten, daß das mit Schlitzen zu versehende Rohr axial und radial exakt gehalten wird.

Diese Aufgabe wird erfindungsgemäß durch die Merkmale des Anspruches 1 gelöst. Durch die erfindungsgemäßen Maßnahmen wird das Rohr beiderseits der Einsatzstellen der Sägen axial und radial zu seiner Achse exakt und fest gehalten, so daß der Sägeschnitt sehr exakt ausgeführt werden kann.

Durch die Ausgestaltung nach Anspruch 2 ist sichergestellt, daß die Schlitze immer die gleiche Lage am Rohr haben, und zwar unabhängig davon, ob Rohre großen Durchmessers oder Rohre kleinen Durchmessers mit Schlitzen versehen werden. Die Maßnahmen nach Anspruch 2 und deren weitere Ausgestaltung sind unabhängig von den Maßnahmen nach Anspruch 1, also auch bei anderer Art der axialen und radialen Halterung und Zentrierung des Rohres einsetzbar; umgekehrt sind die Maßnahmen nach Anspruch 1 auch einsetzbar, wenn die Sägen nicht radial zur Achse des Rohres zugeführt werden. In ihrer gemeinsamen Anwendung sind die Maßnahmen nach Anspruch 1 und Anspruch 2 aber besonders vorteilhaft. Der in dieser Anmeldung verwendete Begriff "Sägen" umfaßt auch das Fräsen, beispielsweise mittels Scheibenfräsern.

Weitere zum Teil erfinderische Ausgestaltungen der Erfindung ergeben sich aus den Unteransprüchen, deren Merkmale wiederum im einzelnen in der Beschreibung des Ausführungsbeispiels erläutert sind.

Einzelheiten der Erfindung ergeben sich aus der nachfolgenden Beschreibung eines Ausführungsbeispieles anhand der Zeichnung. Es zeigen

Fig. 1 einen vertikalen Längsschnitt durch eine Vorrichtung zum Sägen von Schlitzen in Well- und Verbundrohre mit angeformter Muffe in einer Darstellung gemäß der Schnittlinie I-I in Fig. 2,

Fig. 2 eine Draufsicht auf die Vorrichtung in Teil-Schnittdarstellung entsprechend der Schnittlinie II-II in Fig. 1,

Fig. 3 eine schematische Darstellung der Vorrichtung entsprechend einem Querschnitt durch Fig. 1,

Fig. 4 eine Draufsicht auf eine Säge und

Fig. 5 eine Teildarstellung der Säge in gegenüber Fig. 4 vergrößertem Maßstab.

Die in der Zeichnung dargestellte Vorrichtung zum Sägen von Schlitzen in Well- und Verbundrohre mit angeformter Muffe aus Kunststoff weist ein ortsfestes Maschinen-Gestell 1 auf, das auf einem Maschinentisch 2 befestigt ist. Der Maschinentisch 2 ist über Rollen 2a auf Schienen 2b abgestützt. Das Maschinen-Gestell 1 besteht im wesentlichen aus zwei im Abstand voneinander und parallel zueinander und vertikal angeordneten Gestell-Platten 3, 4, die mittels Winkeln 5 mit dem Maschinentisch 2 verschraubt sind. Die Gestell-Platten 3, 4 weisen jeweils eine kreisrunde Öffnung 6, 7 auf, die miteinander fluchten und die eine Mittel-Längs-Achse 8 der Vorrichtung definieren.

Die Gestell-Platten 3, 4 sind mittels mehrerer in gleichen Winkelabständen zueinander angeordneter innerer Verbindungsstangen 9 miteinander verbunden, die mit den Gestell-Platten 3 und 4 mittels Muttern 10 fest verschraubt sind. Diese inneren Verbindungsstangen 9 weisen jeweils gleichen Abstand zur Achse 8 auf und verlaufen parallel zu dieser. Die Gestell-Platten 3 und 4 und die Verbindungsstangen 9 mit den Muttern 10 bilden somit im wesentlichen das Maschinen-Gestell 1.

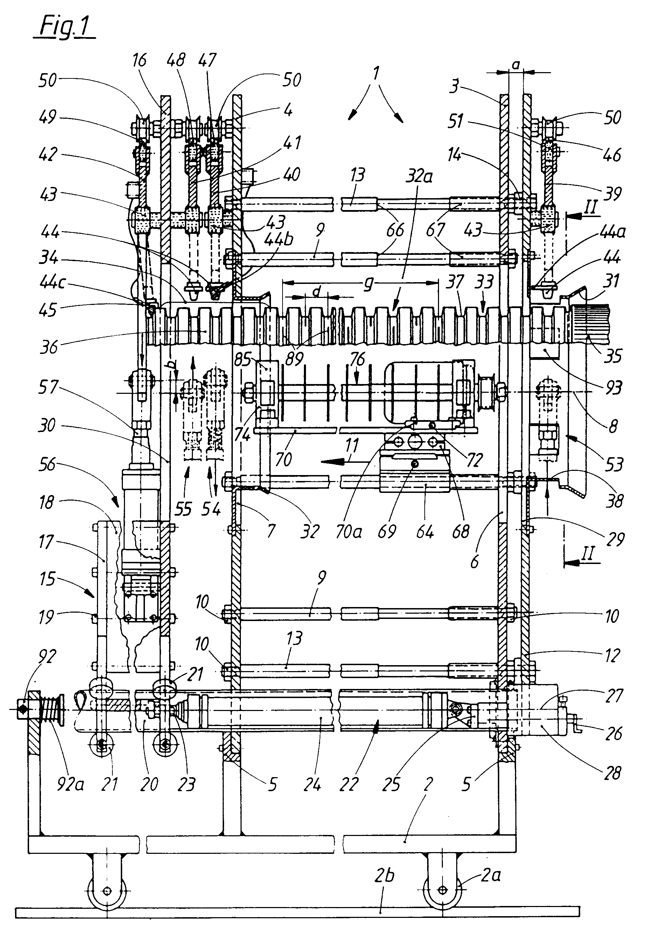

In Produktionsrichtung 11 ist vor der in Fig. 1 rechts dargestellten Gestell-Platte 3 eine der Gestell-Platte 3 ähnliche Trag-Platte 12 angeordnet. Diese ist mit der - in Fig. 1 links dargestellten - anderen Gestell-Platte 4 mittels äußerer Verbindungsstangen 13 verbunden, wobei die Verschraubung ebenfalls mittels Muttern 10 erfolgt. Die äußeren Verbindungsstangen 13 durchsetzen die Gestell-Platte 3, sind mit dieser also nicht verschraubt. Der Abstand a zwischen der Trag-Platte 12 und der benachbarten Gestell-Platte 3 kann durch auswechselbare Distanzstücke 14 eingestellt werden.

Auf der in Produktionsrichtung 11 stromabwärts liegenden Seite des Gestells 1 ist ein Hubschlitten 15 angeordnet, der eine der Trag-Platte 12 und den Gestell-Platten 3, 4 ähnliche Trag-Platte 16 aufweist. Diese bildet zusammen mit einer in Produktionsrichtung 11 beabstandeten Schlitten-Wand 17, mit einer ihnen zwischen angeordneten, sie auf Abstand in Produktionsrichtung 11 haltenden Distanz-Platte 18 und mit diese zusammenhaltenden Verbindungselementen 19, beispielsweise Schrauben, im wesentlichen den Hubschlitten 15. Dieser ist auf zwei horizontal, also parallel zur Achse 8 im Maschinen-Gestell 1 gelagerten, beispielsweise durch Präzisions-Stahlrohre gebildeten Führungsbahnen 20 in Produktionsrichtung 11 verschiebbar geführt. Damit eine spielfreie Führung erreicht ist, sind im Bereich der Trag-Platte 16 und im Bereich der Schlitten-Wand 17 je drei in gleichen Winkelabständen angeordnete Laufrollen 21 im Hubschlitten 15 frei drehbar gelagert, die gegen die rohrförmige Führungsbahn 20 von außen anliegen. Wie Fig. 1 erkennen läßt, ist der Hubschlitten 15 verkürzt dargestellt. Tatsächlich ist seine Länge in Produktionsrichtung 11 so groß, daß eine verkantungsfreie Verschiebung der Trag-Platte 16 gewährleistet ist.

Der Hubschlitten 15 wird mittels eines als Linearantrieb ausgebildeten Hubantriebs 22 angetrieben, der im konkreten Fall als mit Druckmittel beaufschlagbarer Kolben-Zylinder-Antrieb ausgebildet ist. Die Kolbenstange 23 des Hubantriebs 22 ist am Hubschlitten 15 befestigt. Das entgegengesetzte Ende des Zylinders 24 des Hubantriebs 22 ist an einem relativ zur Gestell-Platte 3 in Produktionsrichtung verschiebbaren Widerlager 25 befestigt. Das als Spindelmutter ausgebildete Widerlager 25 ist über eine mit einer Kurbel 26 drehbare Spindel 27 in einem Spindellager 28 gelagert, das an der Gestell-Platte 3 befestigt ist. Durch Drehen der Kurbel 26 und damit der Spindel 27 wird das Widerlager 25 und damit der Zylinder 24 des Hubantriebs 22 in Produktionsrichtung 11 oder entgegen der Produktionsrichtung 11 relativ zum Gestell 1 verstellt.

Die Trag-Platten 12, 16 weisen ebenfalls Öffnungen 29, 30 auf, die die Öffnungen 6, 7 überdecken. An der - bezogen auf die Produktionsrichtung 11 - vorn liegenden Trag-Platte 12 und an der dieser abgewandten Gestell-Platte 4 sind jeweils konzentrisch zur Achse 8 trichterförmig ausgebildete Rohrführungs-Stutzen 31, 32 angeschraubt. Die Öffnungen 6, 7, 29, 30 und die Rohrführungs-Stutzen 31, 32 begrenzen einen Rohrkanal 32a, der konzentrisch zur Mittel-längs-Achse 8 verläuft.

Durch die Rohrführungs-Stutzen 31, 32 ist in Produktionsrichtung 11 ein Rohr 33 in den Rohrkanal 32a einführbar, wobei das Spitzende 34 des Rohres 33 in Produktionsrichtung 11 vorlaufend eingeführt wird. Am in Produktionsrichtung 11 hinteren Ende des Rohres 33 ist eine Muffe 35 angeformt. Das Rohr 33 besteht aus Kunststoff und ist als Wellrohr ausgebildet, d.h. es weist abwechselnd ringförmige Erhebungen 36 und zwischen zwei solchen Erhebungen 36 befindliche ringförmige Vertiefungen 37 auf. Das Rohr 33 kann als sogenanntes einfaches Wellrohr oder auch als Verbundrohr ausgebildet sein, das außer dem äußeren Wellrohr noch ein glattes zylindrisches Innenrohr aufweist, das im Bereich der ringförmigen Vertiefungen 37 im Inneren des Rohres mit dem Außenrohr verbunden ist. Derartige einfache Wellrohre oder gewellte Verbundrohre sind allgemein bekannt und handelsüblich. Gewellte Verbundrohre sind beispielsweise aus der EP 0 231 446 B1 (entsprechend US-Patent 4 930 936) bekannt, woraus auch das einstückige Anformen einer Muffe 35 an derartige Rohre 33 bekannt ist.

Der an der Trag-Platte 12 angebrachte Führungsstutzen 31 weist eine innere Führungsfläche 38 auf, deren Innendurchmesser etwas größer ist als der Außendurchmesser der Muffe 35 eines Rohres 33, auf das die Vorrichtung eingestellt ist. Die Rohrführungs-Stutzen 31, 32 werden ausgewechselt, wenn die Vorrichtung auf einen anderen Rohrdurchmesser umgestellt wird.

An der Trag-Platte 12 und der dieser abgewandten Gestell-Platte 4 sind mehrere - im vorliegenden Fall sechs - in gleichen Winkelabständen zueinander angeordnete Halte- und Zentrier-Hebel 39, 40 angeordnet. An der Trag-Platte 16 des Hubschlittens 15 sind auf der der benachbarten Gestell-Platte 4 zugewandten Seite in gleicher Anordnung Halte- und Zentrier- und Transport-Hebel 41 angebracht. Auf der in Produktionsrichtung 11 hinten liegenden Seite der Trag-Platte 16 des Hubschlittens 15 sind wiederum in gleichartiger Anordnung Anschlag-Hebel 42 angeordnet. Alle Hebel 39, 40, 41, 42 sind als doppelarmige Hebel ausgebildet, die in einem mittleren Bereich jeweils mittels eines Schwenklagers 43 an der Trag-Platte 12, der Gestell-Platte 4 bzw. der Trag-Platte 16 schwenkbar gelagert sind, und zwar in einer Ebene, die normal zur Achse 8 ist. Die Hebel 39, 40, 41 weisen an ihren inneren, der Achse 8 zugewandten Enden Klemm-Segmente 44 auf, die dem Querschnitt der ringförmigen Vertiefungen 37 des Rohres 33 angepaßt sind und in diese eingreifen können. Die Anschlag-Hebel 42 sind mit ähnlich ausgebildeten Anschlag-Segmenten 45 versehen. Die Segmente 44, 45 sind auswechselbar an den Hebeln 39 bis 42 angebracht. An den an der Trag-Platte 12 angeordneten Halte- und Zentrier-Hebeln 39 ist zusätzlich zu dem jeweiligen Klemm-Segment 44 jeweils ein zur Trag-Platte 12 hin vorspringendes Klemm-Element 44a angebracht, das gegen den Außenrand der Muffe 35 zur Anlage kommt, wenn das Rohr 33 so weit durch die Vorrichtung hindurchgeschoben ist, daß sich die nicht dargestellte Stirnseite der Muffe 35 - bezogen auf die Achse 8 - zwischen den Klemm-Segmenten 44 der Halte- und Zentrier-Hebel 39 und der Trag-Platte 12 befindet. Weiterhin ist an einem Klemm-Segment 44 eines Halte- und Zentrier-Hebels 40 ein optischer Sensor 44b angebracht, mittels dessen erfaßt wird, ob sich das erwähnte Klemm-Segment 44 in einer ringförmigen Vertiefung 37 des Rohres 33 befindet. Weiterhin ist an einem Anschlag-Segment 45 eines Anschlag-Hebels 42 ein gleichartiger optischer Sensor 44c angebracht, mittels dessen erfaßt wird, ob sich das Anschlag-Segment 45 in der Position einer Vertiefung 37 des Rohres 33 befindet. Diese optischen Sensoren 44b und 44c sind mit einer nicht dargestellten Steuerung verbunden. Sie geben jeweils ein Signal auf die Steuerung, das bedeutet, daß die ringförmigen Vertiefungen 37 des Rohres 33 ihre - bezogen auf die Achse 8 - richtige axiale und radial Lage haben.

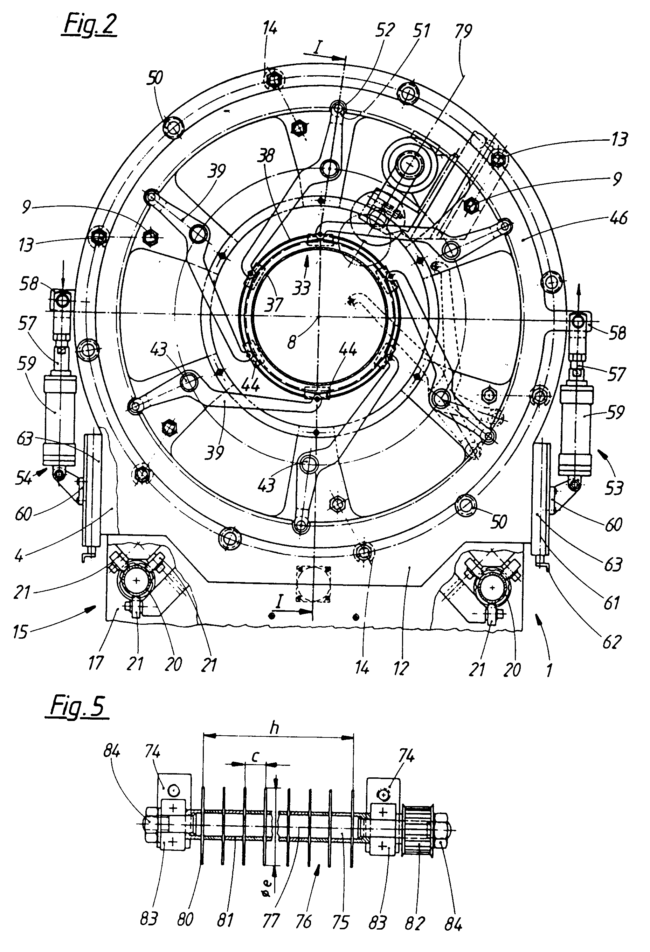

Zum Verschwenken der jeweils an einer Platte 12, 4, 16 gelagerten Hebel 39, 40, 41, 42 ist an der jeweiligen Platte 12, 4, 16 ein Schwenkantriebs-Ring 46, 47, 48, 49 angebracht, der in an der jeweiligen Platte 12, 4, 16 gelagerten Führungsrollen 50 gelagert ist. Diese umgeben den jeweiligen Ring 46 bis 49 an der Außenseite, so daß er um die Achse 8 gedreht bzw. geschwenkt werden kann. Die Hebel 39 bis 42 weisen an ihren äußeren Enden jeweils eine Schwenkrolle 51 auf, die in eine Ausnehmung 52 im jeweiligen Ring 46 bis 49 eingreift, so daß bei einer Verschwenkung des jeweiligen Rings 46 bis 49 um die Achse 8 die zugeordneten Hebel 39 bis 42 um das jeweilige Schwenklager 43 verschwenkt werden, wodurch die Segmente 44 bzw. 45 in ihrem Abstand relativ zur Achse 8 verändert werden. Die Extremstellungen, d.h. die der Achse 8 nächste Stellung und die der Achse 8 am weitesten entfernte Stellung der Segmente 44 bzw. 45 ist in Fig. 2 rechts gestrichelt dargestellt.

Zum Verschwenken der Schwenkantriebs-Ringe 46 bis 49 sind als Linearantriebe ausgebildete Schwenk-Antriebe 53, 54, 55, 56 vorgesehen. Hierbei handelt es sich um mit Druckmittel beaufschlagbare Kolben-Zylinder-Antriebe, deren Kolbenstange 57 an radial zur Achse 8 nach außen vorspringenden Lagerhebeln 58 der Ringe 46 bis 49 angelenkt sind. Die Zylinder 59 der Schwenk-Antriebe 53 bis 56 sind jeweils an schlittenartigen, als Spindelmutter ausgebildeten Widerlagern 60 angelenkt, die mittels einer Spindel 61 mit Handkurbel 62 auf einem als Führung dienenden Spindellager 63 verschiebbar und damit einstellbar angeordnet sind. Der in Fig. 1 links dargestellte Hub b eines Schwenk-Antriebs 53 bis 56 zur Verschwenkung eines Segmentes 44, 45 in eine in die entsprechende Vertiefung 37 des Rohres 33 eingreifende Stellung und aus dieser heraus in eine vom Rohr 33 freie Position ist nur so groß, daß die erwähnten beiden Positionen erreicht werden. Eine Anpassung der Grundstellung der Segmente 44 an den jeweiligen Durchmesser des Rohres 33 erfolgt durch Verschiebung des Widerlagers 60 mittels der Spindel 61 auf dem Spindellager 63.

Auf jeweils einer inneren Verbindungsstange 9 und einer äußeren Verbindungsstange 13, die einander paarweise zugeordnet sind, ist ein Sägen-Träger 64 angebracht. Er weist jeweils zwei zueinander parallele Befestigungslöcher 65 auf, durch die Verbindungsstangen 9 bzw. 13 hindurchgesteckt werden, wobei der Sägen-Träger 64 einseitig gegen Anschlagbunde 66 auf den Verbindungsstangen 9 bzw. 13 anliegt. Auf der anderen Seite sind Distanzhülsen 67 vorgesehen, die wiederum gegen die Gestell-Platte 3 anliegen.

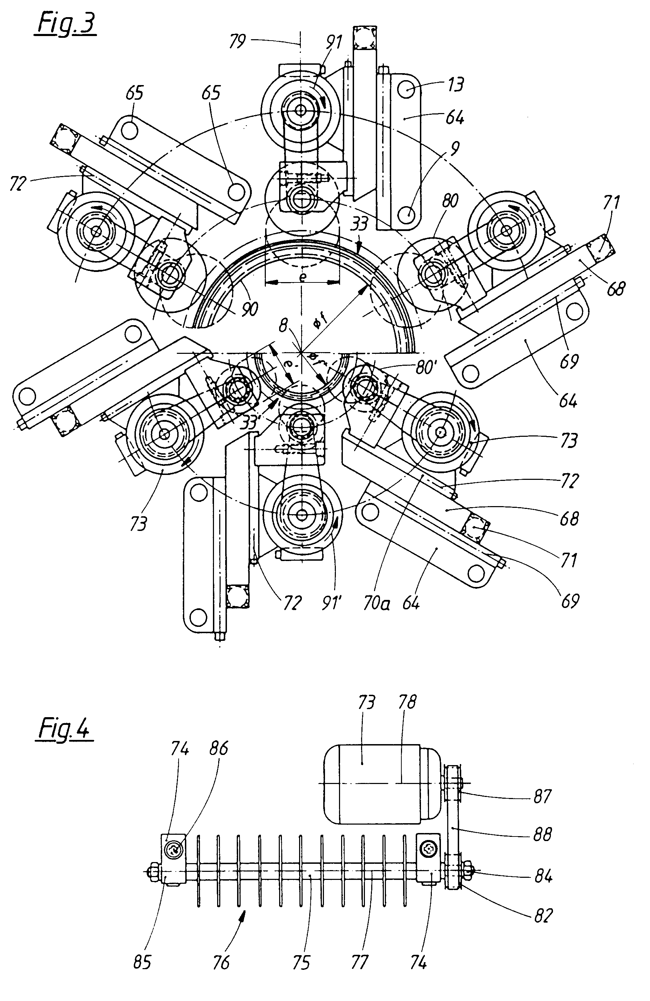

Auf dem Sägen-Träger 64 ist eine Schlittenführung 68 linear verschiebbar angebracht, die mittels einer Spindel 69 verschiebbar ist, und zwar zwischen einer - bezogen auf die Achse 8 - äußeren und einer inneren und jeder beliebigen dazwischenliegenden Position. Die äußere Position ist in Fig. 3 oben dargestellt, während die innere Extremposition in Fig. 3 unten dargestellt ist. Auf dieser Schlittenführung 68 ist ein eine Montageplatte 70 tragender Schlitten 70a verschiebbar geführt, der mittels eines Positionier-Motors 71, beispielsweise eines Schrittmotors, antreibbar ist. Auf dem Schlitten 70a wiederum ist mittels einer Spindel 72 um eine kurze Einstellwegstrecke verschiebbar ein Sägen-Antriebsmotor 73 angeordnet. Weiterhin sind auf diesem Schlitten 70a Lagerböcke 74 für eine Welle 75 einer Säge 76 angebracht. Diese Lagerböcke 74 sind gegenüber dem Schlitten 70a nicht einstellbar. Die Achse 77 der Welle 75 und die Achse 78 des Sägen-Antriebsmotors 73 liegen jeweils in einer gemeinsamen Radialebene 79 mit der Achse 8 und verlaufen parallel zu dieser. Die Verschiebung des Schlittens 70a mittels des Positionier-Motors 71 und auch die Einstellbewegungen mittels der Spindeln 69, 72 erfolgen parallel zu dieser Radialebene 79.

Auf der Welle 75 sind Kreis-Sägeblätter 80 befestigt, die mittels Distanzhülsen 81 in einem Abstand c zueinander angeordnet sind, der identisch der Teilung d der ringförmigen Erhebungen 36 bzw. ringförmigen Vertiefungen 37 des Rohres 33 ist.

An einem, der Lage des Antriebsmotors 73 entsprechenden Ende ist an der Welle 75 ein Zahnriemenrad 82 angeordnet. Außerdem sind auf der Welle 75 zwei Wälzlager 83 angebracht. Die Säge 76 wird durch Zusammenspannen der erläuterten Teile auf der Welle 75 mittels Gewindemuttern 84 montiert. Die beiden Wälzlager 83 werden in die Lagerböcke 74 bei abgenommenem Lagerdeckel 85 eingelegt und dann die Lagerdeckel 85 mittels jeweils einer Schraube 86 befestigt. Das Auswechseln einer Säge 76 geht also sehr schnell vor sich.

Am Antriebsmotor 73 ist ebenfalls ein Zahnriemenrad 87 drehfest angebracht. Über die beiden Zahnriemenräder 82, 87 ist ein Zahnriemen 88 geschlungen. Die Spindel 72 zum Verstellen des Antriebsmotors 73 dient lediglich zum Spannen des Zahnriemens 88. Der Hub dieser Spindel 72 kann also verhältnismäßig klein sein. Zwischen den Zahnriemenrädern 82 und 87 besteht ein Übersetzungsverhältnis, das 1:1 betragen kann, aber auch hiervon abweichen kann. Wie in Fig. 3 obere Hälfte anschaulich dargestellt ist, ist das Übersetzungsverhältnis 1:1, wenn Kreis-Sägeblätter 80 relativ großen Durchmessers e eingesetzt werden. In Fig. 3 untere Hälfte ist dargestellt, daß das Übersetzungsverhältnis der Zahnriemenräder 82 und 87 etwa 2:1 beträgt, wenn Kreis-Sägeblätter 80' mit einem relativ kleinen Durchmesser e' eingesetzt werden. Auf diese Weise kann die Umfangsgeschwindigkeit der Kreis-Sägeblätter 80, 80' - ausgehend von identischer Drehzahl des Sägen-Antriebsmotors 73 - konstant gehalten werden. Kreis-Sägeblätter 80 mit relativ großem Durchmesser e werden eingesetzt zur Erzeugung von Schlitzen 89 in den ringförmigen Vertiefungen 37 des Rohres 33, wenn dieses einen relativ großen Durchmesser f hat, wie es in Fig. 3 oben dargestellt ist. Wenn dagegen das Rohr 33' einen relativ kleinen Durchmesser f' hat, dann werden Kreis-Sägeblätter 80' mit kleinerem Durchmesser e' eingesetzt.

Die Arbeitsweise der Vorrichtung ist wie folgt, wobei nur auf ein Rohr 33 Bezug genommen wird:

Die Kolbenstangen 57 der Schwenk-Antriebe 53 bis 55 sind in den entsprechenden Zylinder 59 eingefahren, d.h. die Hebel 39 bis 41 sind derart verschwenkt, daß die Klemm-Segmente 44 in einer von einem Rohr 33 freien äußeren Position sind.

Die Kolbenstange 57 des Schwenk-Antriebs 56 ist aus ihrem Zylinder 59 ausgefahren, so daß sich der Anschlag-Hebel 42 in einer Position befindet, bei der sein Anschlag-Segment 45 sich in seiner - bezogen auf die Achse 8 - radial inneren Position befindet. Die Kolbenstange 23 des Hubantriebs 22 ist in den Zylinder 24 eingefahren, so daß der Hubschlitten 15 sich in seiner der benachbarten Gestell-Platte 4 nächstgelegenen Position befindet.

Es wird jetzt ein Rohr 33 mit seinem Spitzende 34 voraus in Produktionsrichtung 11 durch den Rohrführungs-Stutzen 31 und dann durch den Rohrführungs-Stutzen 32 eingeschoben, bis die erste ringförmige Erhebung 36 des Rohres 33 gegen die Anschlag-Segmente 45 der Anschlag-Hebel 42 zur Anlage kommt. Hier wird die Einschubbewegung beendet. Das Rohr 33 hat seine Position bezogen auf die Richtung der Achse 8 erreicht. Ein Signal des Sensors 44c quittiert die richtige axiale und radiale Ausgangslage des Rohres 33 und gibt die nachfolgenden Arbeitsgänge frei. Anschließend werden die Schwenk-Antriebe 53, 54, 55 derart betätigt, daß ihre Kolbenstangen 57 ausfahren, so daß die Halte- und Zentrier-Hebel 39, 40 und die Halte- und Zentrier- und Transport-Hebel 41 derart verschwenkt werden, daß deren Klemm-Segmente 44 in die ihnen zugeordneten ringförmigen Vertiefungen 37 des Rohres 33 eingreifen. Nunmehr ist das Rohr 33, dessen Achse mit der Achse 8 zusammenfällt, gegenüber dieser Achse 8 zentriert und axial und tangential gehalten, d.h. es kann radial zur Achse 8 und in Richtung der Achse 8 nicht ausweichen und sich auch nicht um die Achse 8 drehen. Der oder die optischen Sensoren 44b geben hierbei ein Signal ab, daß die Klemm-Segmente 44 die richtige Position gegenüber dem Rohr 33 haben, daß also das Rohr 33 mit seinen ringförmigen Vertiefungen 37 also die richtige Lage zu den Kreis-Sägeblättern 80 bzw. 80' hat.

Nunmehr werden alle Positionier-Motoren 71 aller Sägen 76 in Betrieb gesetzt, so daß die Schlitten 70a mit den ständig laufenden Sägen-Antriebsmotoren 73 und den von diesen angetriebenen Sägen 76 im Schnellgang bis zum Eintauchen in die zugeordneten ringförmigen Vertiefungen 37 des Rohres 33 transportiert werden. Unmittelbar bevor die Kreis-Sägeblätter 80 die Rohrwand 90 im Bereich der ringförmigen Vertiefungen 37 erreichen, wird auf langsamen Säge-Vorschub umgeschaltet und von jedem Sägeblatt 80 ein Schlitz 89 in die einer Vertiefung 37 zugeordnete Rohrwand 90 geschnitten. Wenn durch eine vorgegebene Eintauchtiefe der Sägeblätter 80 in die Rohrwand 90 die gewünschte Umfangserstreckung der Schlitze 89 erreicht wird, werden die Positionier-Motoren 71 umgesteuert und die Schlitten 70a mit den Sägen 76 und den Antriebsmotoren 73 im Schnellgang in ihre Außenposition zurückgefahren. Damit beim Sägen der Schlitze 89 auf das Rohr 33 keine Drehmomente ausgeübt werden, werden die Wellen 75 der Sägen 76 jeweils abwechselnd gegensinnig entsprechend den Antriebs-Drehrichtungspfeilen 91, 91' angetrieben.

Nach Beendigung eines solchen Schlitz-Säge-Vorganges werden die Schwenk-Antriebe 53, 54, 56 in der Weise betätigt, daß die Klemm-Segmente 44 der Halte- und Zentrier-Hebel 39, 40 und die Anschlag-Segmente 45 der Anschlag-Hebel 42 außer Eingriff mit dem Rohr 33 kommen. Die Klemm-Segmente 44 der Halte- und Zentrier- und Transport-Hebel 41 bleiben im Eingriff mit dem Rohr 33. Nunmehr wird der Hubantrieb 22 in der Weise beaufschlagt, daß der Hubschlitten 15 in Produktionsrichtung 11 um einen Hubweg g verschoben wird. Der Hubweg g ergibt sich aus der Zahl z der Sägeblätter 80 multipliziert mit deren Abstand c. Es gilt also $g = z \times c$. Der Hubweg g ist also größer als der Abstand h der äußeren Sägeblätter 80 auf der Welle 75, wofür gilt $h = (z-1) \times c$. Die exakte Einhaltung dieser Verschiebung des Hubschlittens 15 um den Hubweg g wird durch einstellbare Endanschläge 92 erreicht, denen Anschlagdämpfer 92a zugeordnet sind.

In dieser Position werden die Schwenk-Antriebe 53, 54 wieder betätigt, so daß die Klemm-Segmente 44 der Halte- und Zentrier-Hebel 39, 40 wieder in ringförmige Vertiefungen 37 des Rohres 33 eingreifen. Das Rohr 33 ist wieder zentriert und gehalten. Ein neuer Schlitz-Sägevorgang wird durchgeführt, der in gleicher Weise abläuft, wie es bereits beschrieben wurde.

Wenn schließlich die Muffe 35 in den Rohrführungs-Stutzen 31 eingezogen wird, dann legen sich die Klemm-Elemente 44a der zugehörigen Halte- und Zentrier-Hebel 39, die durch fensterartige Öffnungen 93 der Führungsfläche 38 hindurchgreifen, von außen gegen das Ende der Muffe 35.

Nachdem auch unmittelbar neben der Muffe 35 Schlitze 89 in die Rohrwand 90 geschnitten sind, nachdem also das Rohr 33 fertig geschlitzt ist, werden alle Hebel 39, 40, 41 derart verschwenkt, daß ihre Klemm-Segmente 44 außer Eingriff mit dem Rohr 33 kommen. Das Rohr 33 wird dann in Produktionsrichtung 11 aus der Vorrichtung abgezogen.

Beim ersten Sägevorgang werden die ringförmigen Vertiefungen 37, die sich zwischen den Anschlag-Segmenten 45 und dem ersten ihnen zugewandten Sägeblatt 80 befinden, nicht mit Schlitzen 89 versehen. Dies spielt keine Rolle, weil diese Vertiefungen 37 sich im Bereich des Spitzendes 34 des Rohres befinden, das beim Zusammensetzen von mehreren Rohren 33 in einer Muffe 35 angeordnet und daher nach außen verschlossen wird, wobei es keine Rolle spielt, ob die Muffe 35 angeformt ist, oder eine Steckmuffe verwendet wird.

Bei Rohren 33 mit unterschiedlicher Teilung d der ringförmigen Vertiefungen 37 erfolgt eine Anpassung der Lage der Halte- und Zentrier-Hebel 39 durch Veränderung der Lage der Trag-Platte 12 durch Austausch der Distanzstücke 14. Die Anpassung der Lage der Klemm-Segmente 44 der Halte- und Zentrier- und Transport-Hebel 42 erfolgt durch entsprechende Verstellung des Hubantriebes 22 mittels der Spindel 27.

Die Veränderung der Lage der Anschlag-Segmente 45 ebenfalls in Richtung der Achse 8 erfolgt durch Austausch der Anschlag-Hebel 42, was in Fig. 1 durch eine gestrichelte Darstellung angedeutet ist. Die Anschlag-Segmente 45 erhalten hierdurch eine unterschiedliche Stellung in Richtung der Achse 8.

In der geschilderten Vorrichtung können nicht nur Rohre mit kreisförmigem Querschnitt, sondern auch Rohre mit nichtkreisförmigem Querschnitt mit Schlitzen versehen werden. Beispielsweise können mit einem Fuß versehene Sickerleitungsrohre, wie sie beispielsweise aus der EP 0 125 382 B1 (entsprechend US-Patent 4 779 651) bekannt sind, geschlitzt werden. In diesem Fall muß die Anordnung der Sägen 76 angepaßt werden, insbesondere sind insgesamt dann nur vier bzw. fünf Sägen 76 notwendig. Auch die Anordnung der Hebel 39, 40, 41, 42 muß entsprechend angepaßt werden.

Wenn von "sägen" und von "Kreis-Sägeblättern" 80 bzw. 80' gesprochen wird, so ist hiermit gleichermaßen der Begriff "fräsen" und der Begriff "Scheibenfräser" abgedeckt. Zwischen Kreis-Sägeblättern und Scheibenfräsern ist insofern kein Unterschied.

## Patentansprüche

1. Vorrichtung zum Sägen von Schlitzen in Well- und Verbundrohre, die jeweils abwechselnd ringförmige Erhebungen (36) und ringförmige Vertiefungen (37) aufweisen, mit folgenden Merkmalen:

   - Ein Maschinen-Gestell (1) mit einem Rohrkanal (32a) für ein Rohr (33), wobei der Rohrkanal (32a) eine Mittel-Längs-Achse (8) aufweist,
   - ein Hubschlitten (15), der zum Durchziehen des Rohres (33) durch den Rohrkanal (32a) in Produktionsrichtung (11) in Richtung der Achse (8) mittels eines Hubantriebs (22) antreibbar ist,
   - zwei Gruppen von Halte- und Zentrier-Hebeln (39, 40), die mit Klemm-Segmenten (44) versehen sind, wobei die Gruppen - bezogen auf die Produktionsrichtung (11) - im Abstand voneinander am Gestell angeordnet und zwischen einer Eingriffsstellung mit Eingriff der Klemm-Segmente (44) in die ringförmigen Vertiefungen (37) und einer vom Rohr (33) freien Stellung verschwenkbar gelagert sind und wobei die Halte- und Zentrier-Hebel (39, 40) jeder Gruppe den Rohrkanal (32a) um mehr als 180° umgeben,
   - eine Gruppe von Transport-Hebeln (41), die mit Klemm-Segmenten (44) versehen sind, die am Hubschlitten (15) zwischen einer Eingriffsstellung mit Eingriff der Klemm-Segmente (44) in die ringförmigen Vertiefungen (37) und einer vom Rohr (33) freien Stellung verschwenkbar gelagert sind, wobei diese Transport-Hebel (41) den Rohrkanal (32a) um mehr als 180° umgeben,

- Schwenk-Antriebe (53, 54, 55), die jeweils zum Antrieb einer Gruppe von Hebeln (39, 40, 41) vorgesehen sind und
- Sägen (76), die zwischen den zwei Gruppen von Halte- und Zentrier-Hebeln (39, 40) am Maschinen-Gestell (1) angeordnet und zum Rohrkanal (32a) hin und von diesem weg bewegbar sind.

2. Vorrichtung nach Anspruch 1, dadurch gekennzeichnet, daß die Sägen (76) auf geradlinig zum Rohrkanal (32a) hin und von diesem weg verschiebbaren Schlitten (70a) angeordnet sind.

3. Vorrichtung nach einem der Ansprüche 1 bis 2, dadurch gekennzeichnet, daß der Hubschlitten (15) mit mindestens einem Anschlag-Hebel (42) versehen ist, der zwischen einer Anlagestellung am Rohr (33) und einer vom Rohr (33) freien Stellung verschwenkbar am Hubschlitten (15) gelagert ist.

4. Vorrichtung nach einem der Ansprüche 1 bis 3, dadurch gekennzeichnet, daß die Hebel (39, 40, 41, 42) jeder Gruppe von einem gemeinsamen Schwenk-Antrieb (53 bis 56) schwenkantreibbar sind.

5. Vorrichtung nach einem der Ansprüche 1 bis 4, dadurch gekennzeichnet, daß die Hebel (39, 40, 41, 42) einer Gruppe mit jeweils einem Schwenkantriebs-Ring (46 bis 49) verbunden sind, der um die Mittel-Längs-Achse (8) verschwenkbar gelagert ist und mit einem Schwenk-Antrieb (53 bis 56) verbunden ist.

6. Vorrichtung nach einem der Ansprüche 1 bis 5, dadurch gekennzeichnet, daß die Sägen (76) jeweils mindestens ein drehantreibbares KreisSägeblatt (80, 80') aufweisen, das radial zur Achse (8) geradlinig verschiebbar ist.

7. Vorrichtung nach Anspruch 4, dadurch gekennzeichnet, daß mindestens ein Antrieb von Schwenk-Antrieben (53 bis 56) und Hubantrieb (22) als Linear-Antrieb ausgebildet ist.

8. Vorrichtung nach Anspruch 7, dadurch gekennzeichnet, daß der mindestens eine Linear-Antrieb (46 bis 49 und 22) in Richtung seiner linearen Antriebsrichtung mittels eines Spindel-Antriebs einstellbar ist.

9. Vorrichtung nach einem der Ansprüche 1 bis 8, dadurch gekennzeichnet, daß die in Produktionsrichtung (11) stromaufwärts liegenden Halte- und Zentrier-Hebel (39) mit Klemm-Elementen (44a) zur Anlage an einer mit dem Rohr (33) verbundenen Muffe (35) versehen sind.

**Claims**

1. Apparatus for cutting slots in corrugated and twin-wall pipes having annular elevations (36) alternating with annular impressions (37), comprising the following features:

- a machine frame (1) with a pipe duct (32a) for a pipe (33), the pipe duct (32a) having a central longitudinal axis (8),
- a lifting carriage (15) drivable by means of a lifting drive (22) in the direction of the axis (8) for a pipe (33) to be moved through the pipe duct (32a) in the direction of production (11),
- two groups of holding and centering levers (39, 40) which are provided with clamping segments (44), the groups - referred to the direction of production (11) - being spaced from each other on the frame and mounted to be pivotable from a position of engagement of the clamping segments (44) with the annular impressions (37) to a position of release of the pipe (33), and the holding and centering levers (39, 40) of each group enclosing the pipe duct (32a) by more than 180°,
- a group of conveying levers (41) which are provided with clamping segments (44) and which are mounted on the lifting carriage (15) to be pivotable from a position of engagement of the clamping segments (44) with the annular impressions (37) to a position of release of the pipe (33), these conveying levers (41) enclosing the pipe duct (32a) by more than 180°,
- pivoting drives (53, 54, 55) each provided for the driving of a group of levers (39, 40, 41),
- saws (76) disposed on the machine frame (1) between the two groups of holding and centering levers (39, 40) and movable towards, and away from, the pipe duct (32a).

2. Apparatus according to claim 1, characterized in that the saws (76) are disposed on carriages (70a) displaceable lineally towards, and away from, the pipe duct (32a).

3. Apparatus according to one of claims 1 to 2, characterized in that the lifting carriage (15) is provided with at least one stop lever (42), which is supported on the lifting carriage (15) to be pivotable from a position of contact with the pipe (33) to a position of release from the pipe (33).

4. Apparatus according to one of claims 1 to 3, characterized in that the levers (39, 40, 41, 42) of each group are pivotably drivable by a common pivoting drive (53 to 56).

5. Apparatus according to one of claims 1 to 4, <u>characterized in that</u> the levers (39, 40, 41, 42) of each group are connected with a pivoting drive ring (46 to 49) which is pivotable about the central longitudinal axis (8) and connected with a pivoting drive (53 to 56).

6. Apparatus according to one of claims 1 to 5, <u>characterized in that</u> the saws (76) each have at least one rotatably drivable circular saw blade (80, 80'), which is lineally displaceable radially to the axis (8).

7. Apparatus according to claim 4, <u>characterized in that</u> at least one drive of the pivoting drives (53 to 56) and the lifting drive (22) is a linear drive.

8. Apparatus according to claim 7, <u>characterized in that</u> the at least one linear drive (46 to 49 and 22) is adjustable by means of a spindle drive in the direction of its linear direction of drive.

9. Apparatus according to one of claims 1 to 8, <u>characterized in that</u> the holding and centering levers (39) located upstream in the direction of production (11) are provided with clamping elements (44a) to rest on a socket (35) united with the pipe (33).

**Revendications**

1. Dispositif servant à effectuer par sciage des fentes dans des tuyaux ondulés et composites qui présentent à chaque fois une alternance de bosses (36) en forme d'anneau et de creux (37) en forme d'anneau, et possédant les particularités suivantes :

   - un bâti de machine (1) comportant un canal à tuyau (32a) destiné à un tuyau (33), le canal à tuyau (32a) possédant un axe longitudinal médian (8),
   - un chariot mobile (15) qui peut être entraîné dans la direction de l'axe (8) au moyen d'une commande de course (22) afin de tirer le tuyau (33) à travers le canal à tuyau (32a) dans le sens de production (11),
   - deux groupes de leviers de maintien et de centrage (39, 40) qui sont pourvus de segments de serrage (44), les groupes étant disposés - par rapport à la direction de production (11) - à distance les uns des autres sur le bâti et étant montés de manière à pouvoir basculer entre une position de contact, où les segments de serrage (44) rentrent dans les creux annulaires (37), et une position dégagée du tuyau (33), et les leviers de maintien et de centrage (39, 40) de chacun des groupes entourant le canal à tuyau (32a) sur plus de 180°,
   - un groupe de leviers de transport (41), qui sont pourvus de segments de serrage (44), qui sont montés sur le chariot mobile (15) de manière à pouvoir basculer entre une position de contact, où les segments de serrage (44) rentrent dans les creux annulaires (37), et une position dégagée du tuyau (33), lesdits leviers de transport (41) entourant le canal à tuyau (32a) de plus de 180°,
   - des commandes de basculement (53, 54, 55) qui servent chacune à l'entraînement d'un groupe de leviers (39, 40, 41),
   - des scies (76) qui sont disposées sur le bâti de machine (1) entre les deux groupes de leviers de maintien et de centrage (39, 40) et peuvent être déplacées en direction du canal à tuyau (32a) et en être éloignées.

2. Dispositif selon la revendication 1, caractérisé en ce que les scies (76) sont disposées sur des chariots (70a) qui peuvent coulisser de manière rectiligne en direction du canal à tuyau (32a) et en être éloignées.

3. Dispositif selon l'une des revendications 1 à 2, caractérisé en ce que le chariot mobile (15) est pourvu d'au moins un levier d'arrêt (42) qui est monté sur le chariot mobile (15) de manière à pouvoir basculer entre une position d'appui contre le tuyau (33) et une position dégagée du tuyau (33).

4. Dispositif selon l'une des revendications 1 à 3, caractérisé en ce que les leviers (39, 40, 41, 42) de chaque groupe peuvent être entraînés par une commande de basculement commune (53 à 56).

5. Dispositif selon l'une des revendications 1 à 4, caractérisé en ce que les leviers (39, 40, 41, 42) d'un groupe sont à chaque fois reliés à un anneau de commande de basculement (46 à 49) qui est monté de manière à pouvoir basculer autour de l'axe longitudinal médian (8) et qui est relié à une commande de basculement (53 à 56).

6. Dispositif selon l'une des revendications 1 à 5, caractérisé en ce que les scies (76) possèdent chacune au moins une lame de scie (80, 80') qui peut être entraînée en rotation et que l'on peut faire coulisser de manière rectiligne radialement par rapport à l'axe (8).

7. Dispositif selon la revendication 4, caractérisé en ce qu'au moins l'un des entraînements des commandes de basculement (53 à 56) et de la commande de course (22) est réalisé sous la forme d'un entraînement linéaire.

8. Dispositif selon la revendication 7, caractérisé en ce que le ou les entraînements linéaires (46 à 49 et 22) sont réglables dans leur direction d'entraînement linéaire au moyen d'une commande à broche.

9. Dispositif selon l'une des revendications 1 à 8, caractérisé en ce que les leviers de maintien et de centrage (39) qui sont situés en amont par rapport au sens de production (11) sont munis d'éléments de serrage (44a) destinés s'appuyer contre un manchon d'accouplement (35) relié au tuyau (33).

Fig.1

Fig.2

Fig.5

Fig.3

Fig.4